# EUROPEAN PATENT SPECIFICATION

(11) **EP 3 569 950 B1**
(45) Date of publication and mention of the grant of the patent: **16.03.2022**
(21) Application number: 17891914.8
(22) Date of filing: 11.01.2017
(51) Int. Cl.: F25B 1/00, F04C 18/52, F04C 29/04, F25B 1/047, F25B 31/00, F25B 49/02

(54) **REFRIGERATION CYCLE DEVICE**
KÄLTEKREISLAUFVORRICHTUNG
DISPOSITIF À CYCLE DE RÉFRIGÉRATION

(43) Date of publication of application: 20.11.2019
(73) Proprietor: Mitsubishi Electric Corporation, Chiyoda-ku Tokyo 100-8310 (JP)
(72) Inventor: KAMIKAWA, Masaaki, Tokyo 100-8310 (JP); SHIMOJI, Mihoko, Tokyo 100-8310 (JP); NAGATA, Hideaki, Tokyo 100-8310 (JP); MAEDA, Katsuya, Tokyo 100-8310 (JP)
(74) Representative: Pfenning, Meinig & Partner mbB
(86) International application number: PCT/JP2017/000616
(87) International publication number: WO 2018/131089

(56) References cited:
- WO-A1-2016/041026
- WO-A1-2016/046907
- WO-A1-2016/084176
- JP-A- S6 332 253
- JP-A- H04 203 286
- JP-A- H07 286 587
- JP-A- H08 159 573
- JP-A- 2002 130 146
- JP-A- 2011 017 345
- JP-A- 2011 017 345
- JP-A- 2013 136 957
- JP-A- 2014 214 891
- JP-U- S51 100 361
- JP-U- S51 100 361

## Description

### Technical Field

The present invention relates to a refrigeration cycle apparatus including a screw compressor which compresses a fluid and discharges the fluid, and in particular, reduction of, for example, abrasion and deformation of a gate rotor which occur when driving of the screw compressor is stopped.

### Background Art

In the past, screw compressors have been known as compressors for refrigeration and air-conditioning. For example, a single screw compressor includes a screw rotor and gate rotors. The screw rotor has helical screw grooves arranged in its outer peripheral surface, and the gate rotors are each formed in the shape of a disk and have teeth circumferentially arranged at its outer peripheral surface. The teeth of each gate rotor mesh with the screw grooves of the screw rotor. The spaces defined by the teeth of the gate rotors and the screw grooves are compression chambers. The compression chambers are symmetrical with respect to the axis of the screw rotors.

In the single screw compressor, the teeth of the gate rotors are relatively moved in the screw grooves forming the compression chambers. At this time, as the screw rotor rotates, the volume of each of the compression chambers decreases. Furthermore, as the screw rotor continuously rotates, each compression chamber communicates with the outside of the compressor through a discharge port. As a result, high-pressure refrigerant gas compressed in each compression chamber is discharged to the outside through the discharge port. In such a manner, in the compression chamber, a suction process, a compression process and a discharge process are successively performed. The suction process, the compression process and the discharge process constitute one cycle, and the cycle is repeated.

In the single screw compressor, a low-pressure side and a high-pressure side are connected to each other by the compression chambers defined by the screw rotor and the gate rotors as described above. Therefore, when the single screw compressor is stopped, the screw rotor is rotated in a reverse direction because of the difference in pressure between the high-pressure side and the low-pressure side. As the screw rotor is rotated in the reverse direction, the compression chambers (screw grooves) expand, and the inner pressures thereof decrease. If the inner pressures of the compression chambers are lower than that of a suction side (low-pressure chamber), the gate rotors may be floated from gate-rotor supports arranged at rear surfaces of the gate rotors, toward the compression chambers. As a result, the gate rotors or other parts may be abraded and damaged.

In view of the above, a proposed screw compressor includes a valve mechanism which adjusts the flow rate of a fluid flowing through a communication passage which causes the space of a high-pressure side and that of a low-pressure side in a casing to communicate with each other, and a rotation-direction detector. The rotation-direction detector is attached to a rotation shaft of a screw rotor or a driven shaft of a gate rotor, and detects a rotation direction on the basis of the rotation speed of the rotor. When the rotation-direction detector detects that the screw rotor or the gate rotor is rotated in the reverse direction at a predetermined rotation speed or lower, the valve mechanism is opened in order that the pressure of the space of the high-pressure side and that of the low-pressure side in the casing be made closer to each other, thus reducing the difference in between them in the casing (see, for example, Patent Literature 1).

Furthermore, another proposed screw compressor includes an economizer port which allows intermediate pressure refrigerant to be introduced from a refrigerant circuit into a compression chamber which is in compression operation. When the compressor is in the stopped state, refrigerant gas is introduced into screw grooves of a screw rotor in the compressor. Because of introduction of the refrigerant gas, even in the case where the inner pressure of the compression chamber and the inner pressure of the screw grooves at the time of stopping the compressor are decreased lower than the pressure of a low-pressure side in the casing, the difference between those pressures is reduced (see, for example, Patent Literature 2).

### Citation List

### Patent Literature

Patent Literature 1: Japanese Patent No. 4947205
Patent Literature 2: Japanese Unexamined Patent Application Publication No. 2013-136957

### Summary of Invention

### Technical Problem

The configuration disclosed in Patent Literature 1 requires a control system which controls a valve mechanism on the basis of the result of detection by a rotation-direction detector. Inevitably, the cost of an apparatus having such a configuration is high, and such a control is complicated.

The configuration disclosed in Patent Literature 2 is provided on the premise that it has an economizer port through which intermediate pressure refrigerant gas is introduced into compression chambers at the screw rotor in the compressor. Inevitably, this configuration cannot be applied to compressors having no economizer port.

JP S51 100361 U discloses a refrigeration cycle apparatus according to the preamble of claim 1.

The present invention has been made in order to solve the above problems, and an object of the invention is to provide a refrigeration cycle apparatus which can reduce, for example, abrasion and damaging of components of a screw compressor.

### Solution to Problem

This problem is solved by a refrigeration cycle apparatus according to claim 1.

Further improvements of the refrigeration cycle apparatus according to the invention are provided in the dependent claims.

### Advantageous Effects of Invention

According to the present invention, in the case of stopping the screw compressor, the inverter is caused to reduce the driving frequency of the motor until the driving frequency reaches the set stop frequency, which is lower than the lowest driving frequency in the normal operation, thereby reducing the operating capacity of the screw compressor. Since the operating capacity thereof is reduced, the high pressure corresponding to the discharge pressure is reduced, and the low pressure corresponding to the suction pressure is raised thus reducing the difference in pressure between the high-pressure side and the low-pressure side, and reducing energy for reverse rotation. It is therefore possible to reduce reduction of the inner pressure of the compression chamber and deformation of, for example, a gate rotor which forms part of the compression chamber, and thus prevent, for example, abrasion and damaging of the gate rotor at a low cost and with a simple configuration. Brief Description of Drawings

[Fig. 1] Fig. 1 is a diagram illustrating a configuration of a refrigeration cycle apparatus 100 including a screw compressor 102 according to embodiment 1 of the present invention.
[Fig. 2] Fig. 2 is a schematic sectional view of the screw compressor 102 according to embodiment 1.
[Fig. 3] Fig. 3 is a schematic cross-sectional view of the screw compressor 102 according to embodiment 1, which is taken along line A-A.
[Fig. 4] Fig. 4 includes diagrams illustrating the principle of compression by the screw compressor 102 according to embodiment 1.
[Fig. 5] Fig. 5 is a diagram explaining a compression operation which is performed during a normal operation in embodiment 1.
[Fig. 6] Fig. 6 is a diagram explaining a state of a compression chamber 5 after an operation is in a stopped state (reverse rotation of a screw rotor).
[Fig. 7] Fig. 7 is a diagram illustrating a flowchart of a procedure regarding stopping of the screw compressor 102 according to embodiment 1.
[Fig. 8] Fig. 8 is a diagram illustrating a flowchart of a procedure regarding stopping of a screw compressor 102 according to embodiment 3 of the present invention.

### Description of embodiments

Embodiments of the present invention will be described with reference to the drawings. In each of the figures, components which are the same as or equivalent to those in a previous figure are denoted by the same reference signs. The same is true of the entire text of the specification regarding the embodiments described below. Furthermore, the forms of components described in the entire text of the specification herein are mere examples, and are not limited to those described in the text. In particular, in the case where components are combined, a combination of the components is not limited only to that of components provided in the same embodiment, and a component provided in an embodiment can be combined with a component provided in another embodiment, as appropriate. High and low values of pressures are not determined in relation to an absolute value, but are relatively determined based on, for example, a state and an operation of, for example, a system or an apparatus.

### Embodiment 1

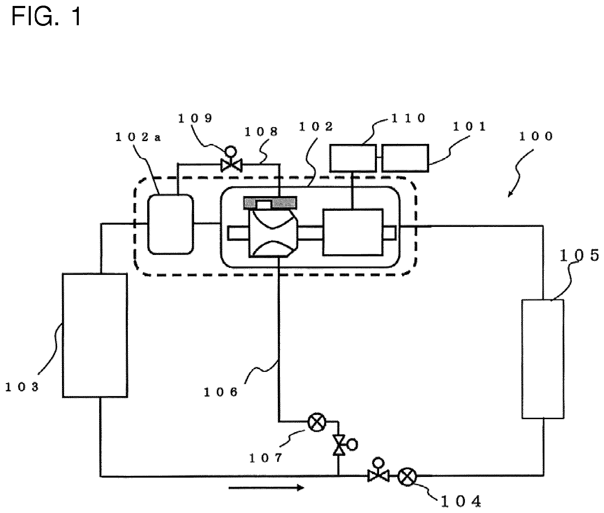

Fig. 1 is a diagram illustrating a configuration of a refrigeration cycle apparatus 100 including a screw compressor 102 according to embodiment 1 of the present invention. The screw compressor 102 as described below is a component included in a refrigerant circuit. Therefore, in the following description, it is assumed that a fluid to be sucked, compressed and discharged by the screw compressor 102 according to embodiment 1, etc., is refrigerant.

The refrigeration cycle apparatus 100 includes a refrigerant circuit as a main component, in which the screw compressor 102, an oil reservoir 102a, a condenser 103, a main-stream liquid expansion valve 104 provided as a pressure reducing device and an evaporator 105 are sequentially connected by refrigerant pipes. In the refrigerant circuit, the refrigerant is circulated.

The screw compressor 102 sucks the refrigerant, compresses the refrigerant to cause it to be in a high-temperature high-pressure state, and discharges the refrigerant. The oil reservoir 102a includes, for example, an oil separator to separate refrigerating machine oil and refrigerant gas, which are discharged from the screw compressor 102, from each other, and recovers the separated refrigerating machine oil, and stores it. The refrigerating machine oil is used as a lubricant for bearings in the screw compressor 102. Furthermore, the refrigerating machine oil functions as a seal for preventing the refrigerant from leaking from compression chambers 5, which will be described later, during compression in the compression chambers 5. The condenser 103 cools refrigerant gas which has been discharged from the screw compressor 102 and has passed through the oil reservoir 102a, and condenses the refrigerant gas. The main-stream liquid expansion valve 104 reduces the pressure of a main stream of the refrigerant which has flowed out of the condenser 103, and expands the main stream refrigerant. Furthermore, the evaporator 105 evaporates the refrigerant which has passed through the main-stream liquid expansion valve 104. The oil reservoir 102a and the compressor may be provided as separate units, and be connected to each other by a pipe, as illustrated in Fig. 1; or the oil reservoir 102a and the compressor may be provided as a single unit without being connected to each other by a pipe.

The refrigeration cycle apparatus 100 further includes a liquid injection pipe 106, which branches off from a pipe through which the main-flow refrigerant flows between the condenser 103 and the main-stream liquid expansion valve 104, and is connected to a liquid injection passage of the screw compressor 102. At the liquid injection pipe 106, for example, a liquid injection expansion valve 107 is provided to adjust the amount of liquid injection.

The refrigerating machine oil separated from the refrigerant gas and stored in the oil reservoir 102a is returned to the screw compressor 102 through an oil injection pipe 108 in order that the oil be used to lubricate the bearings and seal the compression chambers 5, which will be described later. To the oil reservoir 102a, one of ends of the oil injection pipe 108 is connected. The other end of the oil injection pipe 108 is connected to oil injection passages 1b of a casing 1 included in the screw compressor 102, as will be described later. It should be noted that a passage which allows the refrigerating machine oil to pass between the oil reservoir 102a and the compression chambers 5, like the oil injection pipe 108 or the oil injection passages 1b, will be referred to as an oil injection passage. At the oil injection pipe 108, an oil injection solenoid valve 109 is provided. The oil injection solenoid valve 109 functions as an oil adjusting device which adjusts the flow of an oil injection. The oil injection solenoid valve 109 is opened to allow the refrigerating machine oil to flow from the oil reservoir 102a to the compression chambers 5 in the screw compressor 102 or is closed to prevent the refrigerating machine oil from flowing from the oil reservoir 102a to the compression chambers 5. Although it is not limitative, the oil injection solenoid valve 109 may be provided as a device capable of finely adjusting the flow rate of the refrigerating machine oil.

In the case where the oil reservoir 102a is incorporated in the screw compressor 102, the oil injection pipe 108 may be connected to the oil reservoir 102a as in the case where the oil reservoir 102a and the compressor 102 are provided as separated units. The above other end of the oil injection pipe 108 is connected to the oil injection passages 1b of the casing 1 in order that the refrigerating machine oil separated and stored in the oil reservoir 102a be injected into the compression chambers 5, which will be described later. Furthermore, at the oil injection pipe 108, the oil injection solenoid valve 109 which adjusts the flow of the oil injection may be provided. In addition, the oil injection pipe 108 may be omitted. In this case, the oil injection passages 1b are provided in either one or both of the oil reservoir 102a and the casing 1 in order that the refrigerating machine oil be returned to and injected into the compression chambers 5. In this case, the oil injection solenoid valve 109 for opening or closing the oil injection passage is provided at the oil reservoir 102a or the casing 1.

The refrigeration cycle apparatus 100 further includes a controller 101 and an inverter 110. The controller 101 controls, for example, the main-stream liquid expansion valve 104, the liquid injection expansion valve 107 and the oil injection solenoid valve 109. As the controller 10, hardware such as a circuit device which fulfills the function of the controller can be applied. Alternatively, as the controller, a combination of software and an arithmetic device including, for example, a microcomputer or a central processing unit (CPU) can be applied. The arithmetic device executes the software to perform control.

The inverter 110 is a device which drives a motor 2 of the screw compressor 102, which will be described later, at a driving frequency based on, for example, an instruction from the controller 101, and controls the screw compressor 102. For example, the inverter 110 changes the driving frequency of the motor 2 to perform a control for changing a rotation speed of the motor 2, for example, at an operation-capacity changing time, a starting time, a stopping time or a protection control time.

### (Screw Compressor 102)

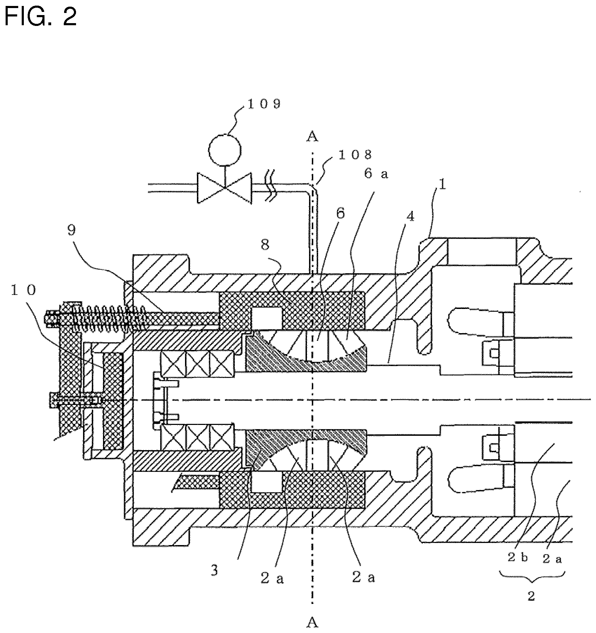

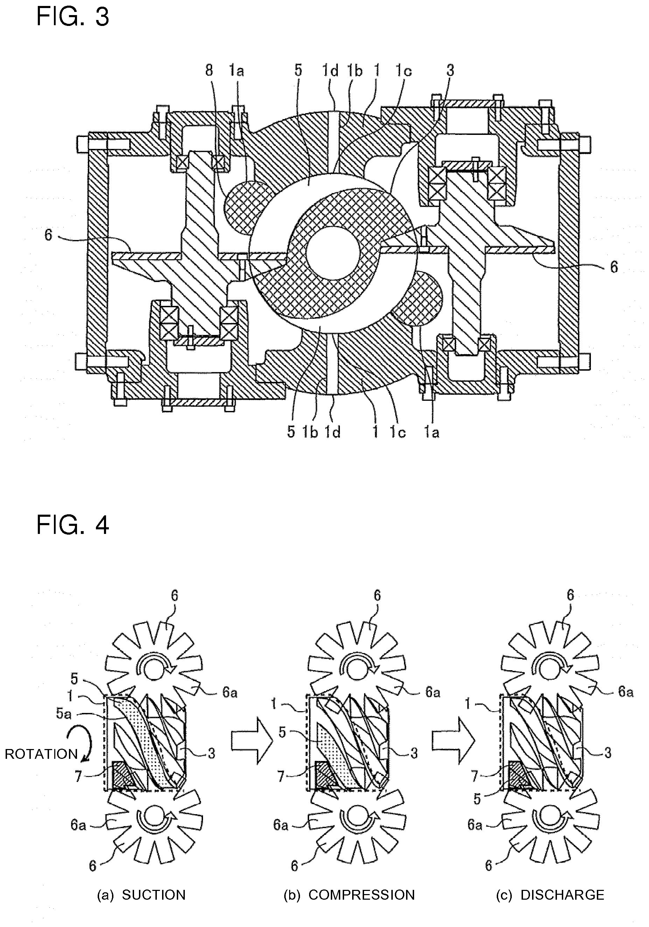

Fig. 2 is a schematic sectional view of the screw compressor 102 according to embodiment 1. Fig. 3 is a schematic cross-sectional view of the screw compressor 102 according to embodiment 1, which is taken along line A-A. The screw compressor 102 according to embodiment 1 will be described with reference to Figs. 2 and 3.

As illustrated in Fig. 2, the screw compressor 102 includes the casing 1, a screw rotor 3, gate rotors 6, the motor 2 which drives the screw rotor 3 to rotate it, slide valves 8, etc. In the casing 1, which is cylindrically formed, the screw rotor 3, the gate rotors 6, the motor 2, the slide valves 8, etc., are provided.

The motor 2 includes a stator 2a fixed to an inner periphery of the casing 1 and a motor rotor 2b provided inward of the stator 2a. The rotation speed of the motor 2 is changed by the inverter 110, thereby adjusting the capacity of the screw compressor 102.

The screw rotor 3 and the motor rotor 2b are arranged around and fixed to a screw shaft 4, which serves as a rotation shaft. The screw rotor 3 has a plurality of helical screw grooves 5a formed in its outer circumferential surface. The screw rotor 3 is rotated in accordance with rotation of the motor rotor 2b fixed to the screw shaft 4.

The screw compressor 102 according to embodiment 1 includes two gate rotors 6. The two gate rotors 6 are symmetrical with respect to the screw shaft 4, and are arranged on both sides of the screw rotor 3. Each of the gate rotors 6 is formed in the shape of a disk having a plurality of teeth 6a circumferentially arranged at its outer periphery. The teeth 6a of the gate rotors 6 mesh with the screw grooves 5a. The spaces defined by the teeth 6a of the gate rotors 6, the screw grooves 5a and a cylindrical inner surface of the casing 1 are used as the compression chambers 5. The compression chambers 5 are symmetrical with respect to the axis of the screw rotor 3.

It should be noted that each of the compression chambers 5 may be defined by engaging an associated one of the gate rotors 6 with an associated one of the screw rotors 3. The gate rotors 6 are provided such that rear sides of the gate rotors 6, which are located opposite to the compression chambers 5, are supported by metal gate-rotor supports in order that the gate rotors 6 withstand the inner pressure of the compression chambers 5.

The inside of the screw compressor 102 is partitioned by a partition wall (not illustrated) into a low-pressure side which is a refrigerant suction side and a high-pressure side which is a refrigerant discharge side. The space of the low-pressure side is used as a low-pressure chamber whose atmosphere is a suction pressure atmosphere. The space of the high-pressure side is used as a high-pressure chamber whose atmosphere is a discharge pressure atmosphere. In the casing 1, discharge ports 7 (see Fig. 4 to be described later), which allow the high-pressure chamber to communicate with the compression chambers 5, are provided on the high-pressure sides of the compression chambers 5.

Furthermore, slide grooves 1a are formed in an inner surface of the casing 1, and extend along the screw shaft 4 of the screw rotor 3. In the slide grooves 1a, the slide valves 8 are provided such that they can be slid in the slide grooves 1a. The slide valves 8 are incorporated in the casing 1, and the slide valves 8 and the casing 1 define the compression chambers 5.

The slide valve 8 are each provided as an internal-volume-ratio changing mechanism which is moved along the screw shaft to adjust the timing of discharge from an associated one of the compression chambers 5. The internal volume ratio means a ratio between the volume of the compression chamber 5 at the time when suction is completed (compression is started) and that just before discharge is started.

The slide valves 8 are connected to a bypass driver 10 such as a piston by coupling rods 9. By driving the bypass driver 10, the slide valves 8 are moved in the slide grooves 1a along the screw shaft of the screw rotor 3.

The bypass driver 10 may drive the slide valves 8, using any drive source. That is, the drive source is not limited. For example, the bypass driver 10 may use a gas pressure or a hydraulic pressure as a drive source, or a motor may be applied as the bypass driver 10, in addition to the above piston.

The casing 1 has the oil injection passages 1b which are through-holes as illustrated in Fig. 3. Each of the oil injection passages 1b has an oil injection port 1c, which is an opening located close to the screw rotor 3, and communicates with an associated one of the compression chambers 5. Each oil injection passage 1b further has a connection port 1d, which is an opening located far from the screw rotor 3, and is connected to the oil injection pipe 108. In such a configuration, the refrigerating machine oil flows out of the oil reservoir 102a, passes through the oil injection pipe 108 and the oil injection solenoid valve 109, and is then injected into the compression chambers 5 through the oil injection passages 1b in the casing 1 by pressure difference. In the case of injecting the oil into the compression chambers 5, the oil may be directly injected into the compression chambers 5 from the oil injection passages1b provided in the casing 1 without passing through the slide valves 8, as illustrated in Fig. 3. Alternatively, the oil injection ports 1c may be provided in the slide valves 8 to allow the oil to be injected into the compression chambers 5 from the oil injection ports 1c after flowing from the casing 1 through the slide valves 8.

### (Operation of Refrigerant Circuit)

An operation of the refrigeration cycle apparatus 100 according to embodiment 1 will be described with reference to Figs. 1 to 3.

The screw compressor 102 sucks refrigerant gas, which is gaseous refrigerant, compresses the gas, and then discharges the compressed gas. The gas discharged from the screw compressor 102 is cooled by the condenser 103. After passing through the condenser 103, the refrigerant liquid obtained by cooling by the condenser 103 is divided into a main stream refrigerant liquid and a sub-stream refrigerant liquid. The pressure of the main stream refrigerant liquid is reduced by the main-stream liquid expansion valve 104, and as a result the main stream refrigerant liquid is expanded. The refrigerant liquid having flowed out of the main-stream liquid expansion valve 104 is heated by the evaporator 105 to change into refrigerant gas. The refrigerant gas having flowed out of the evaporator 105 is sucked into the screw compressor 102.

The remaining one of the refrigerant liquids, into which the refrigerant having passed through the condenser 103 is divided, flows through the liquid injection pipe 106 and is then injected into each of the compression chambers 5. The refrigerant liquid injected into each compression chamber 5 is mixed with refrigerant gas which is being compressed therein, and is then discharged from the screw compressor 102.

The refrigerating machine oil which is separated from the refrigerant gas in the oil reservoir 102a and stored therein is moved through the oil injection pipe 108, the oil injection solenoid valve 109 and the oil injection passages 1b because of the pressure difference between the oil reservoir 102a and each compression chamber 5, and is then injected thereinto.

### (Principle of Compression by Screw Compressor 102 and Operation thereof)

Fig. 4 includes diagrams illustrating the principle of compression by the screw compressor 102 according to embodiment 1. An operation of the screw compressor according to embodiment 1 will be described. For example, when the screw rotor 3 is rotated along with the screw shaft 4 by the motor 2 which is provided as illustrated in Fig. 2, the teeth 6a of the gate rotors 6 are relatively shifted in the screw grooves 5a forming the compression chambers 5, as illustrated in Fig. 4. In each of the compression chambers 5, a suction step, a compression step and a discharge step are successively carried out. The suction, compression and discharge steps constitute a single cycle, and this cycle is repeated. In the following description, each of those steps will be described while paying attention to the compression chamber 5 dotted as indicated in Fig. 4.

Fig. 4, (a), illustrates a state of the compression chamber 5 in the suction step. The screw rotor 3 is driven by the motor 2, and is rotated in a direction indicated by a solid arrow. As the screw rotor 3 is rotated, the volume of the compression chamber 5 decreases as illustrated in Fig. 4, (b).

As the screw rotor 3 is continuously rotated, the compression chamber 5 communicates with the outside through the discharge port 7 as illustrated in Fig. 4, (c). Thus, high pressure refrigerant gas obtained by compression in the compression chamber 5 is discharged to the outside through the discharge port 7. Then, similar compression is re-performed on a rear surface of the screw rotor 3.

In Fig. 4, depiction of the liquid injection passage, the oil injection passages 1b, the slide valve 8 and the slide grooves 1a is omitted. In the compression step, the refrigerant liquid and the refrigerating machine oil flow into the compression chamber 5. In the discharge step, the refrigerant liquid and the refrigerating machine oil having flowed into the compression chamber 5 are discharged together with the refrigerant gas to the outside.

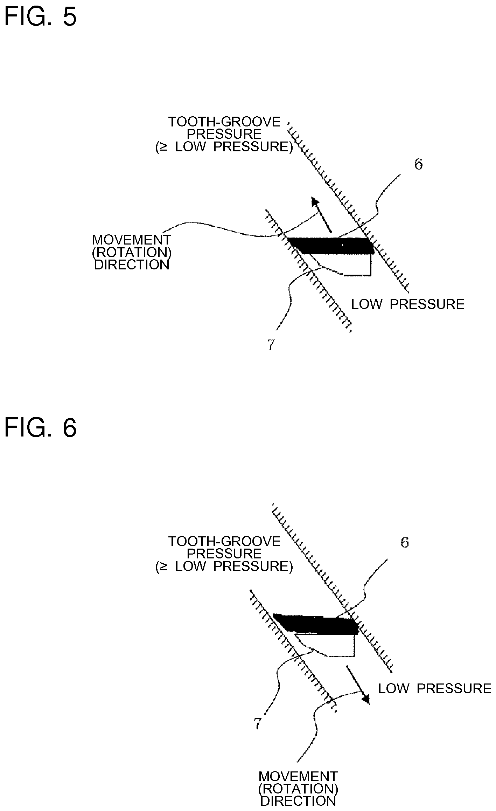

Fig. 5 is a diagram explaining compression which is being performed in a normal operation in embodiment 1. Pressures in the vicinity of the compression chamber 5 and states of components in the normal operation in embodiment 1 will now be described.

Generally, in the screw compressor 102, the refrigerating machine oil is injected into the compression chamber 5 to lubricate the bearings and seal the compression chamber 5. Also, in embodiment 1, in the normal operation, the refrigerating machine oil is injected into the compression chamber 5 through the oil injection pipe 108 connecting the oil reservoir 102a to the casing 1 and the oil injection passages 1b provided in the casing 1 and in the slide valve 8. At this time, the oil injection solenoid valve 109 provided at the oil injection pipe 108 is opened to allow the refrigerating machine oil to flow into the oil injection pipe 108.

In the normal operation, the refrigerant gas is sucked from the suction side, and the volume of the compression chamber 5 decreases as the screw rotor 3 and the gate rotors 6 are rotated. Thus, in accordance with the rotation thereof, a tooth-groove pressure as indicated in Fig. 5 increases higher than a low pressure which is the pressure of the space of the suction side. Thus, the gate rotor 6 is pressed against the gate-rotor support, as illustrated in Fig. 5, because of the difference in pressure between the compression chamber 5 and the space of the suction side.

Fig. 6 is a diagram explaining a state of the compression chamber 5 after the operation is stopped (rotation of the screw rotor is reversed).

Pressures on the vicinity of the compression chamber 5 and states of the components after stopping of the operation (reverse of the rotation of the screw rotor) in embodiment 1 will now be described. Fig. 6 illustrates a main portion during a normal compression after stopping of the operation (inversion of the rotation of the screw rotor).

Generally, after the operation is stopped, refrigerant gas in a discharge chamber corresponding to the high-pressure side flows to a suction chamber corresponding to the low-pressure side, through the compression chamber 5. Thus, during the normal operation, in the compression chamber 5 provided as compression space, the screw rotor 3 and the gate rotors 6 are rotated in reverse directions, as a result of which the volume of the compression chamber 5 increases, and the compression chamber 5 expands. At this time, there is a case where the screw-tooth-groove pressure, which is the inner pressure of the expanded compression chamber 5, is reduced lower than the inner pressure of the low-pressure chamber which is the space of the suction side.

In this case, as indicated in Fig. 6, since the inner pressure of the compression chamber 5 is lower than that of the low-pressure chamber, which is the space of the suction side in the screw compressor 102, because of such a pressure difference, the gate rotor 6 may be floated toward the compression chamber 5, as a result of which it may be abraded and damaged.

In the screw compressor 102 according to embodiment 1, when a stop control instruction is given, the oil injection solenoid valve 109 provided at the oil injection pipe 108, which is connected to the oil reservoir 102a and the casing 1 in order to allow the refrigerating machine oil stored in the oil reservoir 102a to be injected into the compression chamber 5, is closed to prevent the refrigerating machine oil from being injected into the compression chamber 5.

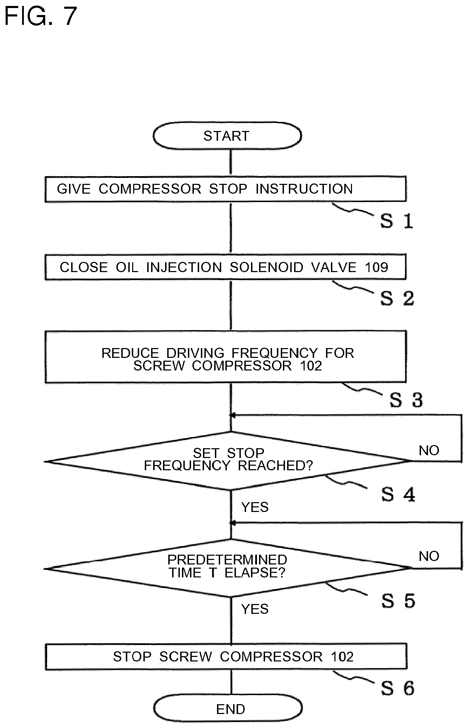

Fig. 7 is a diagram illustrating a flowchart of a procedure regarding stopping of the screw compressor 102 according to embodiment 1. Control regarding stopping of the screw compressor 102 will be described with reference to Fig. 7. In the following description, it is assumed that a control process as indicated in Fig. 7 is performed by the controller 101. A driving frequency of the screw compressor 102, which is controlled by the inverter 110, is based on an instruction from the controller 101.

The controller 101 gives a compressor stop instruction, which is an instruction regarding stopping of the screw compressor 102, to the inverter 110 (step S1). Then, the controller 101 closes the oil injection solenoid valve 109 to stop injection of the refrigerating machine oil into the compression chamber 5 (step S2). Furthermore, the driving frequency of the screw compressor 102 is reduced (step S3). The controller 101 determines whether the driving frequency of the screw compressor 102 reaches a set stop frequency or not (step S4). In embodiment 1, it is assumed that the set stop frequency is the lowest driving frequency in the normal operation.

If determining in step S4 that the driving frequency reaches the set stop frequency, the controller 101 determines whether a predetermined time T elapses or not (step S5). If determining that the predetermined time T elapses, the controller 101 stops the screw compressor 102 (step S6).

In the normal operation, the compression chamber 5 is sealed by the refrigerating machine oil, thereby preventing or reducing refrigerant leakage from the compression chamber 5 to the low-pressure side. In the screw compressor 102 according to embodiment 1, in step S2, the oil injection solenoid valve 109 is closed to prevent the refrigerating machine oil from being injected into the compression chamber 5. As a result, the compression chamber 5 is not sealed by the refrigerating machine oil, whereby the refrigerant can pass between the compression chamber 5 and the low-pressure chamber which is the space of the suction side. Since the refrigerant can pass between the compression chamber 5 and the low-pressure chamber, the pressure difference between them decreases. Therefore, even if the screw rotor 3 and the gate rotors 6 are rotated in the reverse directions, it is possible to prevent or reduce expansion of the refrigerant in the compression chamber 5 and reduction of the inner pressure of in the compression chamber 5.

Furthermore, since sealing by the refrigerating machine oil is not effected, the compression performance is reduce, a high pressure corresponding to a discharge pressure is reduced, and a low pressure corresponding to a suction pressure is raised. As a result, the difference between the discharge pressure and the suction pressure is reduced, and energy for reverse rotation which occurs when the operation is stopped is reduced. Therefore, reverse rotation of the screw rotor 3 is reduced, and reduction of the inner pressure of the compression chamber 5 is also reduced, thus reducing the difference in pressure between the compression chamber 5 and the low-pressure chamber which is the space of the suction side.

In step S3, the inverter 110 is caused to reduce the driving frequency of the motor 2 until the driving frequency reaches the set stop frequency, which is the lowest driving frequency in the normal operation, thereby reducing the operating capacity of the screw compressor 102. Since the operating capacity thereof is reduced, the high pressure corresponding to the discharge pressure is reduced, and the low pressure corresponding to the suction pressure is raised. As a result, the difference between the discharge pressure and the suction pressure is reduced, and the energy for reverse rotation occurring when the operation is stopped is reduced. It is therefore possible to prevent or reduce reverse rotation of the screw rotor 3 and reduction of the inner pressure of the compression chamber 5, and thus reduce the difference in pressure between the compression chamber 5 and the low-pressure chamber which is the space of the suction side. In such a manner, it is possible to reduce floating of the gate rotors 6 toward the compression chamber, thus reducing or preventing, for example, abrasion and damaging of the gate rotors 6.

It should be noted that in the control procedure regarding stopping of the screw compressor 102, which is indicated in Fig. 7, the step 2 of closing the oil injection solenoid valve 109 and the step 3 of reducing the driving frequency for the screw compressor 102 may be interchanged.

As described above, in the screw compressor 102 according to embodiment 1, the oil injection solenoid valve 109 which can perform control for allowing or stopping injection of the refrigerating machine oil is provided at the oil injection pipe 108 or the oil injection passages 1b located between the oil reservoir 102a and the compression chamber 5. In the normal operation, the oil injection solenoid valve 109 is opened to allow injection of the refrigerating machine oil into the compression chamber 5, thus ensuring sealing of the compression chamber 5. In order that the screw compressor 102 be stopped, the oil injection solenoid valve 109 is closed to stop the injection of the refrigerating machine oil, thereby ending sealing of the compression chamber 5 by the refrigerating machine oil, and thus allowing the refrigerant to pass between the high-pressure side and the low-pressure side through the compression chamber 5. It is therefore possible to reduce the high pressure corresponding to the discharge pressure, raising the low pressure corresponding to the suction pressure, and reduce the difference between the discharge pressure and the suction pressure, thus reducing the energy for reverse rotation which occurs when the operation is stopped, and preventing or reducing the reverse rotation of the screw rotor 3. In addition, even if the screw rotor 3 and the gate rotors 6 are rotated in the reverse directions, since the compression chamber 5 is not in the sealed state, the pressure difference between the compression chamber 5 and the low-pressure chamber which is the space of the suction side is small, thus preventing or reducing expansion of the refrigerant in the compression chamber 5 and reduction of the inner pressure of the compression chamber 5. Therefore, it is possible to ensure the performance in the normal operation with a control which is achieved at a low cost and simply performed, and reduce floating of the gate rotors 6 toward the compression chambers 5, which occurs when reverse rotation is performed, thus preventing or reducing abrasion and damaging of the gate rotors 6.

In embodiment 1, generally, when the screw compressor 102 is stopped and reverse operation is performed, refrigerant gas in the discharge chamber which is the high-pressure side flows backward to the suction chamber which is the low-pressure side, through the compression chamber 5. At this time, the refrigerant gas on the high-pressure side has a high temperature. Thus, while flowing backward, the refrigerant gas on the high-pressure side heats the screw rotor 3 cooled by low-temperature low-pressure refrigerant gas. The heated screw rotor 3 thus expands. Furthermore, the injected refrigerating machine oil also has a high temperature. Since the refrigerant having the high temperature is injected into the compression chamber 5, which is a suction side of the screw rotor 3, the screw rotor 3 can further expand. If the screw rotor 3 expands to have a greater diameter than an inner diameter of the casing 1, it can come into contact with the casing 1.

In embodiment 1, in order to stop driving of the screw compressor 102, the oil injection solenoid valve 109 is closed to stop injection of the refrigerating machine oil, whereby the refrigerating machine oil having a high temperature is not injected. It is therefore possible to prevent promotion of expansion of the screw rotor 3, and also prevent the screw rotor 3 from coming into contact with the casing 1, thereby ensuring a high reliability.

As described above, although it suffices that supply of the refrigerating machine oil is stopped, in embodiment 1, the driving frequency of the motor 2 in the screw compressor 102 is reduced to the set stop frequency to reduce the difference in pressure between the high-pressure side and the low-pressure side, and then driving of the screw compressor 102 is stopped. It is therefore possible to further reduce expansion of the refrigerant in the compression chamber 5 and reduction of the inner pressure of the compression chamber 5.

### Embodiment 2

Embodiment 2 of the present invention will be described. A screw compressor 102 according to embodiment 2 has the same configuration as the screw compressor 102 according to embodiment 1. However, in embodiment 2, in order to stop the screw compressor 102, the controller 101 performs control different from that in embodiment 1. To be more specific, embodiment 2 is different from embodiment 1 regarding the control of the driving frequency that is performed in order to stop the screw compressor.

In embodiment 1, as described above, the controller 101 controls the screw compressor 102 to be stopped, after stopping the oil injection and reducing the driving frequency of the screw compressor 102 to the set stop frequency. In embodiment 1, the set stop frequency is the lowest frequency set in the normal operation. In embodiment 2, the set stop frequency is a value different from the lowest frequency set in the normal operation. That is, the set stop frequency is a driving frequency lower than the lowest frequency set in the normal operation.

As described above, in the screw compressor 102 according to embodiment 2 and a refrigeration cycle apparatus 100 provided with this screw compressor 102, the set stop frequency is determined as a driving frequency lower than the lowest driving frequency in the normal operation. It is therefore possible to more effectively obtain advantages similar to those in embodiment 1. While ensuring the performance and the reliability in the normal operation, it is possible to further effectively reduce floating of the gate rotors 6 toward the compression chambers 5, which occurs when the operation of the screw compressor 102 is stopped, and reverse rotation is performed, and effectively prevent or reduce abrasion and damaging of the gate rotors 6.

### Embodiment 3

Embodiment 3 of the present invention will be described. The configuration of the screw compressor 102 according to embodiment 3, opening and closing control of the oil injection solenoid valve 109 and the set stop frequency in embodiment 3 are the same as those in embodiments 1 and 2. However, in embodiment 3, control for the motor 2 which is performed in order to stop the screw compressor 102 is different from those in embodiments 1 and 2.

In embodiments 1 and 2 described above, the controller 101 closes the oil injection solenoid valve 109 to reduce the rotation speed to a value corresponding to the set stop frequency, and then stops the screw compressor 102. It should be noted that there is a case where the motor 2 continues rotating because of its inertial force even if power supply is stopped to stop the screw compressor 102. In such a case, when refrigerant gas in the discharge chamber which is the high-pressure side flows to the suction chamber which is the low-pressure side, through the compression chamber 5, and the screw rotor 3 and the gate rotors 6 rotate in the reverse directions, they further continue rotating in the reverse direction because of the inertial force. Thus, because of the reverse rotation of the screw rotor 3 and the gate rotors 6, a screw-tooth-groove inner pressure, which is a refrigerant pressure in the compression chamber 5, is reduced to a value lower than the inner pressure of the low-pressure chamber which is the space of the suction side. In view of this point, in embodiment 3, the motor 2 of the screw compressor 102 stopped is subjected to direct-current (DC) braking control.

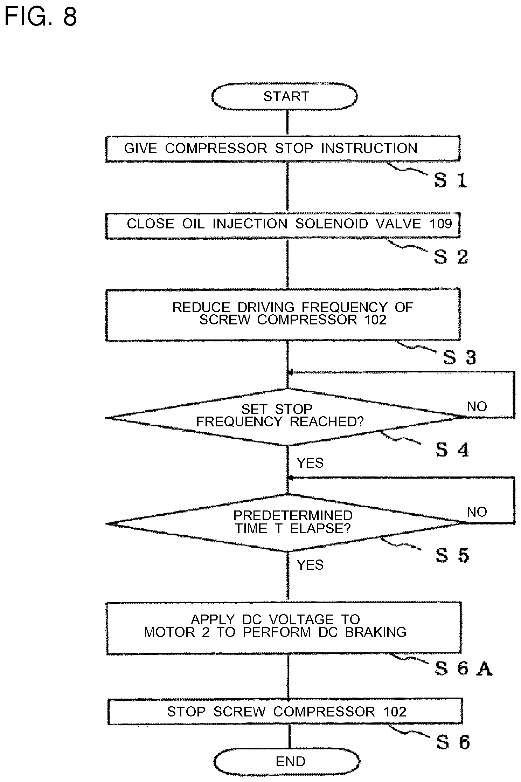

Fig. 8 is a diagram illustrating a flowchart of a procedure regarding stopping of the screw compressor 102 according to embodiment 3 of the present invention. In the following description, it is assumed that the control processing as indicated in Fig. 8 is performed by the controller 101 as in embodiment 1. In Fig. 8, steps denoted by the same step numbers as in Fig. 7 are the same as those described with respect to embodiment 1. In the case of stopping the screw compressor 102 in step S6, the controller 101 gives to the inverter 110 an instruction to apply a DC voltage to the motor 2 without converting the voltage (step S6A).

It should be noted that the above DC braking means stopping of the rotation by applying a DC voltage to the motor 2. In general, when the screw compressor 102 is stopped, the motor 2 continuously rotates because of its inertial force or the like, and thereafter, refrigerant gas in the discharge chamber which is the high-pressure side flows to the suction chamber which is the low-pressure side, through the compression chamber 5. As a result, because of the inertial force, the screw rotor 3 and the gate rotors 6 rotate in the reverse directions. In embodiment 3, DC braking is performed to stop rotation of the motor 2. It is therefore possible to reduce the time required to prevent reverse rotation, or reduce the time period in which reverse rotation is performed.

Furthermore, in general, in the case where the screw compressor 102 is stopped, and the reverse rotation of the screw rotor 3 is reduced, the refrigerating machine oil flows from the oil reservoir 102a having a high pressure to screw-tooth grooves which form part of the compression chamber 5 and the suction-side space having a low pressure, through the oil injection passage 1b. Then, when the screw compressor 102 is started next, the refrigerating machine oil is suddenly sucked from the suction side, as a result of which for example, the screw compressor 102 may be partially damaged. In the screw compressor 102 according to embodiment 3, as in embodiments 1 and 2, during control for stopping of the screw compressor 103, the oil injection solenoid valve 109 is closed to prevent the refrigerating machine oil from flowing to the compression chamber 5, as in embodiments 1 and 2. Thus, the refrigerating machine oil can be prevented from flowing from the oil reservoir 102a.

As described above, in the screw compressor 102 according to embodiment 3 and the refrigeration cycle apparatus 100 including this screw compressor 102, in the case where driving of the screw compressor 102 is stopped, DC braking is performed to control stop of the motor 2, and the oil injection solenoid valve 109 is closed to prevent the refrigerating machine oil from flowing to the compression chambers 5. It is therefore possible to eliminate or reduce the time for which the screw rotor 3 is rotated in the reverse direction, without causing the refrigerating machine oil stored in the oil reservoir 102a to flow therefrom. Thus, it is possible to reduce floating of the gate rotors 6 toward the compression chamber 5, which occurs during reverse rotation, at a lower cost, and thus also prevent or reduce abrasion and damaging of the gate rotors 6.

### Embodiment 4

In each of the refrigeration cycle apparatuses 100 according embodiments 1 to 3 as described above, in step S1, the controller 101 gives a stop instruction to the inverter 110, and in step S3, the inverter 110 is caused to reduce the driving frequency of the screw compressor 102. In this case, in step S2, the oil injection solenoid valve 109 is caused to stop injection of the refrigerating machine oil into the compression chamber 5, whereby the compression chamber 5 is not sealed by the refrigerating machine oil. However, the procedure of the control is not limited to the above procedure. Step S2 may be omitted, and only the driving frequency of the screw compressor 102 may be adjusted.

### Reference Signs List

1 casing 1a slide groove 1b oil injection passage 1c oil injection port 1d connection port 2 motor 2a stator 2b motor rotor 3 screw rotor 4 screw shaft 5 compression chamber 5a screw groove 6 gate rotor 6a tooth 7 discharge port 8 slide valve 9 coupling rod 10 bypass driver 100 refrigeration cycle apparatus 101 controller 102 screw compressor 102a oil reservoir 103 condenser 104 main-stream liquid expansion valve 105 evaporator 106 liquid injection pipe 107 liquid injection expansion valve 108 oil injection pipe 109 oil injection solenoid valve 110 inverter

## Claims

1. A refrigeration cycle apparatus (100) comprising:
a screw compressor (102);
an oil reservoir (103) configured to store a refrigerating machine oil discharged from the screw compressor (102);
an oil injection passage configured to allow the refrigerating machine oil to flow from the oil reservoir (103) to a compression chamber (5) in the screw compressor (102);
an oil adjusting device (109) configured to adjust a flow of the refrigerating machine oil in the oil injection passage; and
a controller (101) configured to control the oil adjusting device (109),
wherein in a case of stopping the screw compressor (102), the controller (101) closes the oil adjusting device (109) to prevent the refrigerating machine oil in the oil injection passage from flowing into the compression chamber (5) in the screw compressor (102), and then stop the screw compressor (102); **characterized in** further comprising
an inverter device (110) configured to adjust a driving frequency of the screw compressor (102),
wherein in the case of stopping the screw compressor (102), the inverter device (110) reduces the driving frequency to a set stop frequency determined in advance, and then stops the screw compressor (102); and
wherein the set stop frequency is a driving frequency lower than a lowest driving frequency in a normal operation.

2. The refrigeration cycle apparatus (100) of claim 1, wherein the inverter device (110) is configured to perform a DC braking control to stop the screw compressor (102).

3. A refrigeration cycle apparatus (100) of any one of claims 1 to 2, further comprising a refrigerant circuit having a condenser (103), a pressure reducing device (104) and an evaporator (105), whereby the condenser (103), the pressure reducing device (104), the evaporator (105) and the screw compressor (102) are connected by pipes in which refrigerant is circulated.

## Patentansprüche

1. Kältekreislaufvorrichtung (100), umfassend:
einen Schraubenverdichter (102);
ein Ölreservoir (103), das eingerichtet ist, ein von dem Schraubenverdichter (102) abgegebenes Kältemaschinenöl zu speichern;
einen Öleinspritzdurchlass, der eingerichtet ist, zu ermöglichen, dass das Kältemaschinenöl aus dem Ölreservoir (103) zu einer Verdichtungskammer (5) in dem Schraubenverdichter (102) strömen kann;
eine Ölanpassungseinrichtung (109), die eingerichtet ist, eine Strömung des in dem Öleinspritzdurchlass strömenden Kältemaschinenöls anzupassen, und
eine Steuereinheit (101), die eingerichtet ist, die Ölanpassungseinrichtung (109) zu steuern,
wobei in einem Fall des Stoppens des Schraubenverdichters (102) die Steuereinheit (101) die Ölanpassungseinrichtung (109) schließt, um zu verhindern, dass das Kältemaschinenöl in dem Öleinspritzdurchlass in die Verdichtungskammer (5) in dem Schraubenverdichter (102) strömt, und dann den Schraubenverdichter (102) zu stoppen; **gekennzeichnet durch** ferner umfassend:
eine Invertereinrichtung (110), die eingerichtet ist, eine Antriebsfrequenz des Schraubenverdichters (102) anzupassen,
wobei in dem Fall des Stoppens des Schraubenverdichters (102) die Invertereinrichtung (110) die Antriebsfrequenz auf eine im Voraus bestimmte eingestellte Stoppfrequenz reduziert und dann den Schraubenverdichter (102) stoppt; und
wobei die eingestellte Stoppfrequenz eine Antriebsfrequenz niedriger als eine niedrigste Antriebsfrequenz in einem Normalbetrieb ist.

2. Kältekreislaufvorrichtung (100) nach Anspruch 1, wobei die Invertereinrichtung (110) eingerichtet ist, eine Gleichstrombremssteuerung durchzuführen, um den Schraubenverdichter (102) zu stoppen.

3. Kältekreislaufvorrichtung (100) nach einem der Ansprüche 1 bis 2, ferner umfassend einen Kältemittelkreislauf, aufweisend einen Kondensator (103), eine Druckminderungseinrichtung (104) und einen Verdampfer (105), wobei der Kondensator (103), die Druckminderungseinrichtung (104), der Verdampfer (105) und der Schraubenverdichter (102) durch Leitungen verbunden sind, in denen das Kältemittel zirkuliert wird.

## Revendications

1. Appareil de cycle de réfrigération (100) comprenant :
un compresseur à vis (102) ;
un réservoir d'huile (103) configuré afin de stocker une huile de machine de réfrigération évacuée du compresseur à vis (102) ;
un passage d'injection d'huile configuré afin de permettre à l'huile de machine de réfrigération de s'écouler à partir du réservoir d'huile (103) vers une chambre de compression (5) dans le compresseur à vis (102) ;
un dispositif de réglage d'huile (109) configuré afin de régler le flux d'huile de machine de réfrigération dans le passage d'injection d'huile ; et
un contrôleur (101) configuré afin de commander le dispositif de réglage d'huile (109),
dans lequel, en cas d'arrêt du compresseur à vis (102), le contrôleur (101) ferme le dispositif de réglage d'huile (109) afin d'empêcher l'écoulement de l'huile de machine de réfrigération dans le passage d'injection d'huile, dans la chambre de compression (5) du compresseur à vis (102), et d'arrêter ensuite le compresseur à vis (102) ; **caractérisé en ce qu'**il comprend en outre
un dispositif onduleur (110) configuré afin de régler la fréquence de commande du compresseur à vis (102),
dans lequel, en cas d'arrêt du compresseur à vis (102), le dispositif onduleur (110) réduit la fréquence de commande à une fréquence d'arrêt réglée déterminée à l'avance, et arrête ensuite le compresseur à vis (102) ; et
dans lequel la fréquence d'arrêt réglée est une fréquence de commande inférieure à la fréquence de commande la plus basse en fonctionnement normal.

2. Appareil de cycle de réfrigération (100) selon la revendication 1, dans lequel le dispositif onduleur (110) est configuré afin d'exécuter une commande de freinage DC pour arrêter le compresseur à vis (102).

3. Appareil de cycle de réfrigération (100) selon la revendication 1 ou 2, comprenant en outre un circuit de fluide frigorigène qui présente un condenseur (103), un dispositif de réduction de la pression (104), et un évaporateur (105), grâce à quoi le condenseur (103), le dispositif de réduction de la pression (104), l'évaporateur (105) et le compresseur à vis (102), sont connectés par des canalisations dans lesquelles circule le fluide frigorigène.
